# EUROPEAN PATENT SPECIFICATION

(11) **EP 2 770 767 B1**
(45) Date of publication and mention of the grant of the patent: **01.02.2017**
(21) Application number: 12841999.1
(22) Date of filing: 22.10.2012
(51) Int. Cl.: H04W 12/04, H04W 12/06, H04W 88/02

(54) **METHOD, SYSTEM, AND RELATED DEVICE FOR GSM SECURITY**
VERFAHREN, SYSTEM UND ZUGEHÖRIGE VORRICHTUNG FÜR GSM-SICHERHEIT
PROCÉDÉ, SYSTÈME ET DISPOSITIF ASSOCIÉ POUR LA SÉCURITÉ DU GSM

(30) Priority: 21.10.2011 CN 201110323667
(43) Date of publication of application: 27.08.2014
(73) Proprietor: Huawei Technologies Co., Ltd., Shenzhen, Guangdong 518129 (CN)
(72) Inventor: BI, Xiaoyu, Shenzhen Guangdong 518129 (CN); CHEN, Jing, Shenzhen Guangdong 518129 (CN); XU, Yixian, Shenzhen Guangdong 518129 (CN)
(74) Representative: Epping - Hermann - Fischer
(86) International application number: PCT/CN2012/083283
(87) International publication number: WO 2013/056681

(56) References cited:
- EP-A1- 2 106 190
- WO-A1-2005/032201
- WO-A1-2011/130681
- CN-A- 101 163 003
- CN-A- 101 277 533
- CN-A- 101 322 428
- CN-A- 101 552 982
- US-A1- 2005 251 681
- US-A1- 2006 280 305
- Jakub Bluszcz: "Leliwa Technical Bulletin", , 20 November 2009 (2009-11-20), XP055158757, Retrieved from the Internet: URL:http://www.leliwa.com/downloads/UMTS_S ecurity.pdf [retrieved on 2014-12-15]

## Description

### FIELD OF THE INVENTION

The present invention relates to the field of mobile communications technologies, and in particular, to a GSM security method and system, and relevant apparatuses.

### BACKGROUND OF THE INVENTION

In a Global System for Mobile Communications (Global System for Mobile Communications, GSM), a mobile station (mobile station, MS) performs one-way authentication with a network during the access; during the one-way authentication, the MS and the network both generate a same root key Kc. Subsequently, when the MS and the network exchange information (such as user data, signalling messages), both of them perform protect the information by adopting the generated root key Kc and a corresponding cipher algorithm (such as A5), so as to guarantee the security of information. During practical application, a network generally sends a ciphering mode command (CIPHERING MODE COMMAND) to an MS to instruct the MS whether to start a cipher mode and which cipher algorithm needs to be used if a cipher mode is started. After receiving the CIPHERING MODE COMMAND sent by the network, the MS may start a cipher mode, protect information by adopting the generated root key Kc and the algorithm instructed by the network, and send the information to the network. In addition, after successfully starting a cipher mode, the MS returns a ciphering mode complete (CIPHERING MODE COMPLETE) response to the network, so that after learning that the MS has successfully started a cipher mode, the network may protect the information by adopting the generated root key Kc and the same cipher algorithm and send the information to the MS. Here, a security mechanism in a GSM system is formed.

Although the security mechanism in a GSM system has enhanced the security of the GSM system to a certain extent, due to some inherent deficiencies of the security mechanism, the security mechanism still has some severe security hazards. For example, when a network sends a cipher algorithm instruction to an MS through a CIPHERING MODE COMMAND, the CIPHERING MODE COMMAND is under no security protection, an attacker can easily change or tamper the cipher algorithm with a high security level instructed by the network into a cipher algorithm with a low security level, or directly tamper the instruction of the network of starting a cipher mode into the instruction of not starting a cipher mode, leading to a common Bidding Down attack among the network attacks. Additionally, the inherent deficiencies of the security mechanism also cause security problems to some services applied in a GSM system. For example, when a public warning system (Public Warning System, PWS) is applied in a GSM system, the PWS might broadcast an urgent message (an alarm message such as earthquake, tsunami, hurricane, explosion), but an MS needs to verify the integrity of the urgent message by adopting a PWS public key which is sent by a network through a CIPHERING MODE COMMAND message to confirm whether the urgent message is valid. However, as the CIPHERING MODE COMMAND message is under no security protection, so the security of a PWS public key cannot be ensured, thereby failing to ensure that MS verifies the validity of the urgent message, which causes limits to the application of a PWS in a GSM system.

In conclusion, the security mechanism of a GSM system has severe security hazards, and the application of some services including a PWS in the GSM system is limited.

Jakub Bluszcz: "Leliwa Technical Bulletin" (2009-11-20) discloses a method which is composed of a challenge/response protocol identical to the GSM subscriber authentication and key establishment protocol combined with a sequence number-based one-pass protocol for network authentication.

WO 2011/130681 A1 discloses a method for transitioning a remote station from a current serving network node having an enhanced security context to a new serving network node.

WO 2005/032201 A1 discloses the network side normally selects an enhanced version of one of the basic cryptographic security algorithms supported by the mobile, and transmits information representative of the selected algorithm to the mobile terminal.

### SUMMARY OF THE INVENTION

Embodiments of the present invention provide a GSM security method and system, and relevant apparatuses, which are used for enhancing the security of a GSM system, so as to extend the application of some services including a PWS in the GSM system.

A GSM security method includes:
deriving, by a base station controller, BSC, a network integrity key by adopting a network root key generated in a one-way authentication process with a mobile station as a key derivation function parameter and adopting a key derivation function, KDF;
protecting, by the BSC, a security start message by adopting the network integrity key, where the security start message at least carries an identifier of an integrity algorithm; and
sending, by the BSC, the protected security start message to the mobile station, so that the mobile station protects information by adopting a mobile station integrity key and the integrity algorithm and sends the protected information to the BSC; where the mobile station integrity key is derived by the mobile station by adopting a mobile station root key generated in a one-way authentication process with the BSC, the mobile station root key and the network root key are the same, and the mobile station integrity key and the network integrity key are the same; wherein the security start message further carries a public warning system, PWS, public key, and the method further comprises: obtaining, by the mobile station, the PWS public key by parsing the security start message, and adopting the PWS public key to verify integrity of an urgent message broadcast by a PWS, to confirm whether the urgent message is valid; wherein the protecting, by the BSC, a security start message by adopting the network integrity key comprises: protecting, by the BSC, the identifier of the integrity algorithm and the PWS public key in the security start message by adopting the network integrity key.

A GSM security method includes:
deriving, by a mobile station, a mobile station integrity key by adopting a mobile station root key generated in a one-way authentication process with a BSC, as a parameter and adopting a key derivation function, KDF;
receiving, by the mobile station, a security start message sent by the BSC, where the security start message at least carries an identifier of an integrity algorithm; the security start message is protected by the BSC by adopting a network integrity key, the network integrity key is derived by the BSC by adopting a network root key generated in a one-way authentication process with the mobile station; the mobile station root key and the network root key are the same, and the mobile station integrity key and the network integrity key are the same; and
protecting, by the mobile station, information by adopting the mobile station integrity key and the integrity algorithm and sending the protected information to the BSC; wherein the security start message further carries a PWS public key, and the method further comprises: obtaining, by the mobile station, the PWS public key by parsing the security start message, and adopting the PWS public key to verify integrity of an urgent message broadcast by a PWS, to confirm whether the urgent message is valid.

A base station controller, BSC, applied to a GSM includes:
a derivation unit, configured to derive a network integrity key by adopting a network root key generated by the BSC in a one-way authentication process with a mobile station as a key derivation function parameter and adopting a key derivation function KDF;
a protection unit, configured to protect a security start message by adopting the network integrity key derived by the derivation unit, where the security start message at least carries an identifier of an integrity algorithm; and
a sending unit, configured to send the security start message protected by the protection unit to the mobile station, so that the mobile station protects information by adopting a mobile station integrity key and the integrity algorithm and sends the protected information to the BSC; where the mobile station integrity key is derived by the mobile station by adopting a mobile station root key generated in a one-way authentication process with the BSC, the mobile station root key and the network root key are the same, and the mobile station integrity key and the network integrity key are the same; wherein the security start message further carries a PWS public key, and the mobile station obtains the PWS public key by parsing the security start message, and adopts the PWS public key to verify integrity of an urgent message broadcast by a PWS, to confirm whether the urgent message is valid; wherein the protection unit is specifically configured to protect the identifier of the integrity algorithm and the PWS public key in the security start message by adopting the network integrity key derived by the derivation unit.

A mobile station applied to a GSM includes:
a derivation unit, configured to derive a mobile station integrity key by adopting a mobile station root key generated by the mobile station in a one-way authentication process with a BSC as a parameter and adopting a key derivation function KDF;
a receiving unit, configured to receive a security start message sent by the BSC, where the security start message at least carries an identifier of an integrity algorithm; the security start message is protected by the BSC by adopting a network integrity key, the network integrity key is derived by the BSC by adopting a network root key generated in a one-way authentication process with the mobile station; the mobile station root key and the network root key are the same, and the mobile station integrity key and the network integrity key are the same;
a protection unit, configured to protect information by adopting the mobile station integrity key derived by the derivation unit and the integrity algorithm; and
a sending unit, configured to send the information protected by the protection unit to the BSC; wherein the security start message further carries a PWS public key, and the mobile station further comprises a verification unit, configured to obtain the PWS public key by parsing the security start message received by the receiving unit, and adopt the PWS public key to verify integrity of an urgent message broadcast by a PWS, to confirm whether the urgent message is valid.

A GSM security system includes a BSC and a mobile station.

The BSC is configured to derive a network integrity key by adopting a network root key generated in a one-way authentication process with the mobile station; protect a security start message by adopting the network integrity key, where the security start message at least carries an identifier of an integrity algorithm; and send the security start message protected by the protection unit to the mobile station.

The mobile station is configured to derive a mobile station integrity key by adopting a mobile station root key generated in a one-way authentication process with the BSC; receive the security start message sent by the BSC, and protect information by adopting the mobile station integrity key and the integrity algorithm; and send the protected information to the BSC.

In conclusion, in the embodiments of the present invention, a BSC may derive a network integrity key by adopting a network root key generated in a one-way authentication process with a mobile station, protect a security start message by adopting the network integrity key, and send the protected security start message to the mobile station, so that the mobile station may protect information by adopting a mobile station integrity key and an integrity algorithm instructed in the security start message and send the protected information to the BSC; and/or, so that the mobile station obtains a PWS public key by parsing the security start message, and adopts the PWS public key to verify the integrity of an urgent message broadcast by a PWS, to confirm whether the urgent message is valid. Because a security start message sent by a BSC is protected by a network integrity key, it is very difficult for an attacker to launch a Bidding Down attack on the identifier of an integrity algorithm and/or PWS public key carried in the security start message, so that the security of the identifier of the integrity algorithm and/or PWS public key carried in the security start message is ensured, so as to enhance the security of a GSM system, thereby extending the application of some services including a PWS in the GSM system.

### BRIEF DESCRIPTION OF THE DRAWINGS

To illustrate the technical solutions in the embodiments of the present invention more clearly, the following briefly introduces the accompanying drawings required for describing the embodiments of the present invention. Apparently, the accompanying drawings in the following description show merely some embodiments of the present invention, and a person skilled in the art may still derive other drawings from these accompanying drawings without creative efforts.
FIG. 1 is a flow chart diagram of a GSM security method provided in Embodiment 1 of the present invention;
FIG. 2 is a flow chart diagram of a GSM security method provided in Embodiment 2 of the present invention;
FIG. 3 is a flow chart diagram of a GSM security method provided in Embodiment 3 of the present invention;
FIG. 4 is a flow chart diagram of a GSM security method provided in Embodiment 4 of the present invention;
FIG. 5 is a structural diagram of a network entity provided in an embodiment of the present invention;
FIG. 6 is an optimized structural diagram of the network entity shown in FIG. 5;
FIG. 7 is a structural diagram of a mobile station provided in an embodiment of the present invention;
FIG. 8 is an optimized structural diagram of the mobile station shown in FIG. 7;
FIG. 9 is a structural diagram of another network entity provided in an embodiment of the present invention;
FIG. 10 is a structural diagram of another mobile station provided in an embodiment of the present invention; and
FIG. 11 and FIG. 12 each are a structural diagram of a GSM security system provided in an embodiment of the present invention.

### DETAILED DESCRIPTION OF THE EMBODIMENTS

The following clearly and completely describes the technical solutions in the embodiments of the present invention with reference to the accompanying drawings in the embodiments of the present invention. Apparently, the embodiments to be described are merely a part rather than all of the embodiments of the present invention. All other embodiments obtained by a person of ordinary skill in the art based on the embodiments of the present invention without creative efforts shall fall within the protection scope of the present invention.

Embodiments of the present invention provide a GSM security method and system, and relevant apparatuses, which are used for enhancing the security of a GSM system, so as to extend the application of some services including a PWS in the GSM system. A GSM system involved in an embodiment of the present invention further includes a general packet radio service (General Packet Radio Service, GPRS) system as the delay of a GMS system. To enhance security of a GSM system, in the embodiment of the present invention, the functions of an MS and the functions of a network entity need to be upgraded in advance, so that an MS and a network entity may derive a same integrity key by adopting a same root key generated in a one-way authentication process. The MS may include a mobile phone, a handheld computer, and a mobile Internet device (Mobile Internet Devices, MID); the network entity may be a mobile switching center (Mobile Switching Center, MSC) or a visitor location register (Visitor Location Register, VLR) in a core network, or a base station controller (Base Station Controller, BSC) in an access network, which is not limited in the embodiments of the present invention. Apparently, if the network entity is a BSC in an access network, a core network entity can be prevented from being tampered. In addition, in a GMS system, to better recognize an upgraded MS and network entity, a mark "+" may be used to identify the upgraded MS and network entity, while an MS and a network entity that are not upgraded are not identified by the mark "+". A GSM security method and system, and relevant apparatuses provided in the embodiments of the present invention are illustrated in detail in the following through specific embodiments.

### Embodiment 1

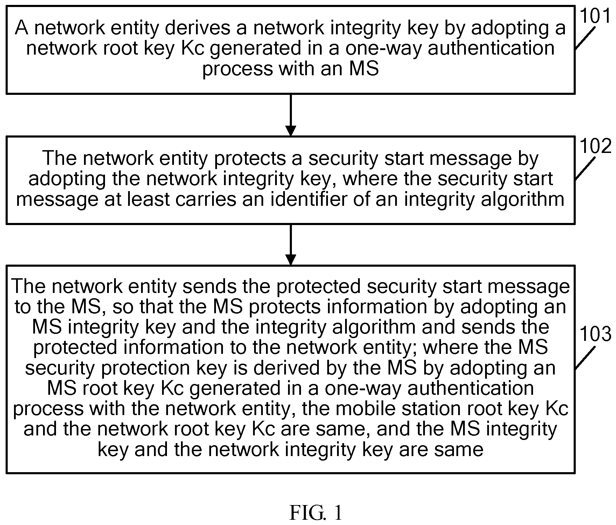

Refer to FIG. 1. FIG. 1 is a flow chart diagram of a GSM security method provided in Embodiment 1 of the present invention. As shown in FIG. 1, the method may include the following steps:
101. A network entity derives a network integrity key by adopting a network root key Kc generated in a one-way authentication process with an MS.
102. The network entity protects a security start message by adopting the network integrity key, where the security start message at least carries an identifier of an integrity algorithm.
103. The network entity sends the protected security start message to the MS, so that the MS protects information by adopting an MS integrity key and the integrity algorithm and sends the protected information to the network entity; where the MS integrity key is derived by the MS by adopting an MS root key Kc generated in a one-way authentication process with the network entity, the mobile station root key Kc and the network root key Kc are the same, and the MS integrity key and the network integrity key are the same.

In a GSM system, an MS performs one-way authentication with a network entity during access, and in a one-way authentication process, the network entity and the MS each generate a same root key Kc, which is the common knowledge for a person of ordinary skill in the art, and is not introduced in detail in the embodiment of the present invention. For ease of description, in the embodiment of the present invention, the root key Kc generated by the network entity in a one-way authentication process with the MS is referred to as a network root key Kc, while the root key Kc generated by the MS in a one-way authentication process with the network entity is referred to as an MS root key Kc.

After the network root key Kc is generated, the network entity may derive a network integrity key Ki by adopting the network root key Kc. Further, the network entity may also derive a cipher key Kcp and an integrity key Kip at the same time by adopting the network root key Kc, which is not limited in the embodiment of the present invention. The integrity key is mainly used to perform integrity protection, and the cipher key may be used to perform cipher protection. A network cipher key and an MS cipher key are the same. Specifically, the specific manner for the network entity to derive a network integrity key by adopting the network root key Kc may include a direct manner and a negotiation manner. The direct manner may have the following two forms:
Form 1: Derive an integrity protection key Ki from Kc, that is, Kc-->Ki;
   where Ki = KDF[Kc, S], Fc = 0x14, P = MS id, L = the length of MS id;
   S indicates a parameter formed after Fc, P and L are serially connected; Fc indicates a parameter; P indicates an MS identifier; and L indicates the length of the MS identifier.
Form 2: Derive a cipher key Kcp + an integrity protection key Kip from Kc, that is, Kc-->Kcp, kip;
   where, Kip = KDF[Kc, S], Fc = 0x14, P = MS id, L = the length of MS id;
   Kcp = KDF[Kip, S]], Fc = 0x15, P = MS id, L = the length of MS id;
   S indicates a parameter formed after Fc, P and L are serially connected; Fc indicates a parameter; P indicates an MS identifier; and L indicates the length of the MS identifier.

That is to say, in the direct manner, the network entity derives a network integrity key by adopting the network root key Kc generated in a one-way authentication process with the MS as a key derivation function parameter and adopting a key derivation function KDF.

The negotiation manner of deriving an integrity key Ki is introduced in the following, and the negotiation manner is as follows:
1). A network entity receives a request message sent by an MS to trigger the generation of a random parameter Rn; where the request message at least carries MS identity information (for example, an MS id).
2). A network entity derives a network integrity key Ki by adopting a network root key Kc generated in a one-way authentication process with the MS and the random parameter Rn as key derivation function parameters and adopting a key derivation function F, that is, ki = F {Kc, Rn}.

Further, in the negotiation manner, if the request message sent by the MS further carries a random parameter Ru generated by the MS in addition to the MS identity information, the network entity may derive a network integrity key Ki by adopting the network root key Kc generated in a one-way authentication process with the MS, the random parameter Ru and the random parameter Rn as key derivation function parameters and adopting a key derivation function F, that is, ki = F{Kc, Ru, Rn}.

Further, in the negotiation manner, if the request message sent by the MS further carries a string (for example, "PWS") in addition to the MS identity information and the random parameter Ru generated by the MS, the string is used for indicating a type of a service to which the derived Ki is applied (that is, indicating the use of Ki), so that the network entity may derive a network integrity key Ki by adopting the network root key Kc generated in a one-way authentication process with the MS, the random parameter Ru, the random parameter Rn and the string as key derivation function parameters and adopting a key derivation function F, for example, Ki = F{Kc, Ru, Rn, "PWS"}.

In the embodiment of the present invention, if the request message sent by the MS carries the random parameter Ru generated by the MS, after the network entity receives the request message and triggers the generation of the random parameter Rn used for deriving Ki, the network entity may further return Rn and Ru to the MS, so that after verifying that Ru returned by the network entity and Ru sent by the MS are the same, the MS may derive an integrity key Ki by adopting the MS Kc. Further, if the request message sent by the MS does not carry the random parameter Ru generated by the MS, after the network entity receives the request message and triggers the generation of the random parameter Rn used for deriving the integrity key Ki, the network entity may also return Rn to the MS, so that the MS may derive Ki by adopting the MS Kc and Rn returned by the network entity. In the embodiment of the present invention, the specific manner for the MS to derive an integrity key Ki is introduced subsequently.

The request message sent by the MS may be a Layer 3 message, for example, an LA message. The network entity may send the random parameter to the MS through a CIPHERING MODE COMMAND (for a GSM system); or may send the random parameter through an authentication and ciphering request message (authentication and ciphering request) (for a GPRS system).

Optionally, the MS and the network entity may also create two new messages: one new message is used for the MS to send a key derivation function parameter (for example, Ru, a string) to the network entity, and the other new message is used for the network entity to send a random parameter (for example, Rn, Ru) to the MS, which are not limited in the embodiment of the present invention.

In the embodiment of the present invention, if the request message sent by the MS does not carry a string used for indicating a type of a service to which the derived integrity key Ki is applied (that is, indicating the use of an integrity key Ki), it indicates that the derived Ki is universal and may be used for protecting the integrity of various messages and signalling.

The implementation process that the network entity derives the integrity key by adopting the network Kc is mainly described in the foregoing. After deriving the integrity key, the network entity may execute step 102, that is, protect the security start message by adopting the network integrity key, where the security start message at least carries an identifier of the integrity algorithm.

In the embodiment of the present invention, one or more integrity algorithms may be configured on the MS and the network entity in advance. After the integrity algorithm is configured, the network entity may instruct the integrity algorithm, which is specifically used by the MS, in the security start message sent to the MS. That is, the network entity may instruct an identifier of an integrity algorithm corresponding to the integrity algorithm, which is specifically used by the MS, in the security start message sent to the MS, so that the MS may learn, according to the identifier of the integrity algorithm, the integrity algorithm instructed by the network entity for use. The integrity algorithm used in the GSM system includes, but not limited to, Null, Kasumi, SNOW 3G and AES algorithms.

In the embodiment of the present invention, the MS may also carry, in the request message (for example, a Layer 3 message) sent to the network entity, an integrity algorithm identifier list of integrity algorithms supported by the MS, so that after receiving the list, the network entity may select an integrity algorithm from the list, and indicates the integrity algorithm identifier of the integrity algorithm to the MS through the security start message.

In the embodiment of the present invention, the security start message in step 102 may be a CIPHERING MODE COMMAND in a GSM system, or an authentication and ciphering request in a GPRS system, which is not limited in the embodiment of the present invention.

In the embodiment of the present invention, the message content of a CIPHERING MODE COMMAND and an Authentication and ciphering request is further described. Table 1 shows the message content of a CIPHERING MODE COMMAND in the embodiment of the present invention. The identifier of an integrity algorithm (algorithm identifier) may be carried in an information unit (Ciphering Mode Setting) in Table 1. Table 2 shows the message content of the Ciphering Mode Setting in Table 1. As shown in Table 2, an algorithm identifier may be indicated by adopting the second bit to the fourth bit in the message content of the Ciphering Mode Setting.

**Table 1 Message Content of CIPHERING MODE COMMAND**

| **IEI** | **Information element** | **Type/Reference** | **Presence** | **Format** | **length** |
|---|---|---|---|---|---|
| | RR management Protocol Discriminator | Protocol Discriminator | M | V | 1/2 |
| | | 10.2 | | | |
| | Skip Indicator | Skip Indicator | M | V | 1/2 |
| | | 10.3.1 | | | |
| | Cipher Mode Command Message Type | Message Type | M | V | 1 |
| | | 10.4 | | | |
| | Ciphering Mode Setting | Cipher Mode Setting | M | V | 1/2 |
| | | 10.5.2.9 | | | |
| | Cipher Response | Cipher Response | M | V | 1/2 |
| | | 10.5.2.10 | | | |

**Table 2 Message Content of Cipher Mode Setting**

| 8 | 7 | 6 | 5 | 4 | 3 | 2 | 1 | |
|---|---|---|---|---|---|---|---|---|
| Ciph Mod Set IE | | | | algorithm identifier | | | SC | Octet 1 |

The defined integrity algorithm set IE may adopt, but not limited to, the form in Table 3.

**Table 3 Form of Integrity Algorithm Set IE**

| 8 | 7 | 6 | 5 | 4 | 3 | 2 | 1 | |
|---|---|---|---|---|---|---|---|---|
| Integrity algorithm IE | | | | algorithm identifier | | | | Octet 1 |

In the embodiment of the present invention, before a network entity sends a CIPHERING MODE COMMAND to an MS, a network integrity key is already derived. Therefore, when sending the CIPHERING MODE COMMAND to the MS, the network entity may protect the CIPHERING MODE COMMAND by adopting the network integrity key. Compared with the prior art in which no security protection is provided when a network entity sends a CIPHERING MODE COMMAND, in the embodiment of the present invention, a bidding down attack on the CIPHERING MODE COMMAND may be prevented, thereby ensuring the security of an algorithm identifier carried in the Ciphering Mode setting of the CIPHERING MODE COMMAND. If the network entity does not protect the CIPHERING MODE COMMAND by adopting the network integrity key, an attacker may easily tamper the algorithm identifier carried in the Ciphering Mode setting of the CIPHERING MODE COMMAND, causing a bidding down attack.

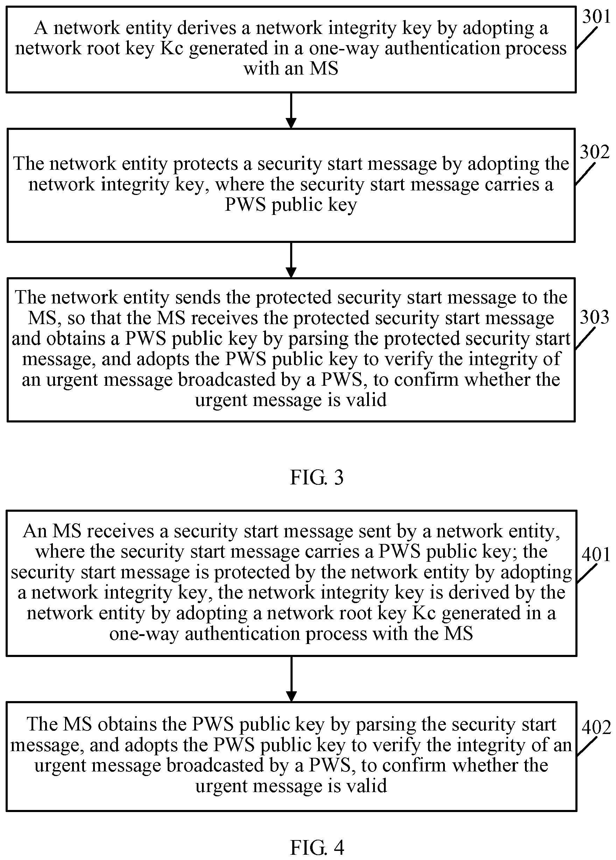

Table 4 shows the message content of an integrity algorithm information unit, namely, an Integrity algorithm, in an Authentication and ciphering request. As shown in FIG. 4, an algorithm identifier may be indicated by adopting the second bit to the fourth bit in the message content of the Integrity algorithm in the Authentication and ciphering request.

**Table 4 Message Content of Integrity Algorithm**

| 8 | 7 | 6 | 5 | 4 | 3 | 2 | 1 | |
|---|---|---|---|---|---|---|---|---|
| Integrity algorithm IE | | | | algorithm identifier | | | SC Octet 1 | |

Alternatively, the message content of the integrity algorithm information unit, namely, the Integrity algorithm, in the authentication and ciphering request may also be shown in Table 3, which is not limited in the embodiment of the present invention.

When the algorithm identifier is Null, it indicates that no integrity protection is started.

In the embodiment of the present invention, before the network entity sends an Authentication and ciphering request to an MS, a network integrity key is already derived. Therefore, when sending the Authentication and ciphering request to the MS, the network entity may protect the Authentication and ciphering request by adopting the network integrity key. Compared with the prior art in which no security protection is provided when a network entity sends an Authentication and ciphering request, in the embodiment of the present invention, a bidding down attack on the Authentication and ciphering request may be prevented, thereby ensuring the security of an algorithm identifier carried in the Integrity algorithm of the Authentication and ciphering request.

In the embodiment of the present invention, protecting, by the network entity, the security start message by adopting the network integrity key in step 102 may be specifically: protecting the whole security start message by adopting the network integrity key, or protecting the integrity algorithm identifier carried in the security start message by adopting the network integrity key.

Optionally, the security start message in step 102 may further carry a PWS public key in addition to the identifier of the integrity algorithm, so that after receiving the protected security start message, the MS may obtain the PWS public key by parsing the protected security start message, and adopt the PWS public key to verify the integrity of an urgent message (an alarm message of earthquake, tsunami, hurricane, explosion or the like) broadcast by a PWS, to confirm whether the urgent message is valid, thereby preventing unnecessary public panic caused by an false urgent message.

Correspondingly, if the security start message in step 102 not only carries the identifier of the integrity algorithm but also carries the PWS public key, protecting, by the network entity, the security start message by adopting the network security protection key in step 102 may be specifically: protecting the whole security start message by adopting the network integrity key, or protecting the identifier of the integrity algorithm and the PWS public key carried in the security start message by adopting the network integrity key.

For example, the network entity may perform signature calculation on the identifier of the integrity algorithm and the PWS public key carried in the security start message by adopting the network integrity key, so as to protect the identifier of the integrity algorithm and the PWS public key carried in the security start message. Alternatively, the network entity may perform signature calculation on the identifier of the integrity algorithm carried in the security start message by adopting the network integrity key, and perform exclusive or processing on the network integrity key and the PWS public key, so as to protect the identifier of the integrity algorithm and the PWS public key carried in the security start message.

In the embodiment of the present invention, if the security start message protected by the network entity carries a PWS public key, after the MS receives the protected security start message, the MS may obtain the PWS public key by parsing the security start message, and adopt the PWS public key to verify the integrity of an urgent message broadcast by a PWS, to confirm whether the urgent message is valid. Because the security start message sent by the network entity is protected by a network integrity key, it is very difficult for an attacker to launch a Bidding Down attack on the PWS public key carried in the security start message, so that the security of the PWS public key carried in the security start message is ensured, so as to enhance the security of a GSM system, thereby extending the application of some services including a PWS in the GSM system.

In Embodiment 1 of the present invention, a network entity may derive a network integrity key by adopting a network root key generated in a one-way authentication process with an MS, protect a security start message by adopting the network integrity key, and send the protected security start message to the MS, so that the MS may protect information by adopting an MS integrity key and an integrity algorithm corresponding to an integrity algorithm identifier carried in the security start message and send the protected information to the network entity. Because the security start message sent by a network entity is protected by the network integrity key, it is very difficult for an attacker to launch a Bidding Down attack on the integrity algorithm identifier carried in the security start message, so that the security of the integrity algorithm identifier carried in the security start message is ensured, so as to enhance the security of a GSM system, thereby extending the application of some services including a PWS in the GSM system.

### Embodiment 2

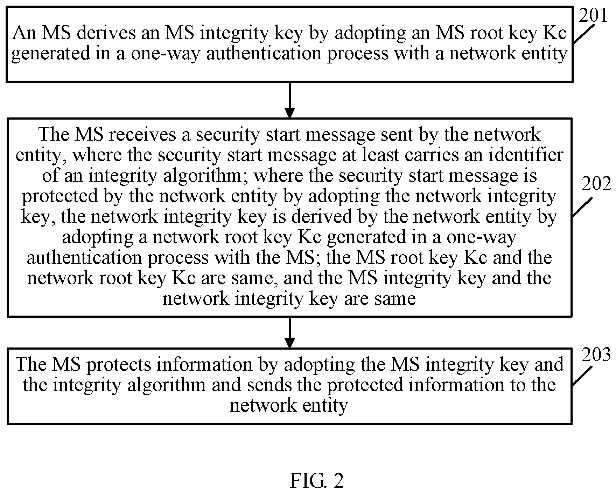

Refer to FIG. 2. FIG. 2 is a flow chart diagram of a GSM security method provided in Embodiment 2 of the present invention. As shown in FIG. 2, the method may include the following steps:
201. An MS derives an MS integrity key by adopting an MS root key Kc generated in a one-way authentication process with a network entity.
202. The MS receives a security start message sent by the network entity, where the security start message at least carries an identifier of an integrity algorithm; where the security start message is protected by the network entity by adopting a network integrity key, the network integrity key is derived by the network entity by adopting a network root key Kc generated in a one-way authentication process with the MS; the MS root key Kc and the network root key Kc are the same, and the MS integrity key and the network integrity key are the same.

The security start message may be a CIPHERING MODE COMMAND (for a GSM system) or an Authentication and ciphering request (for GPRS), which is not limited in the embodiment of the present invention.
203. The MS protects information by adopting the MS integrity key and the integrity algorithm and sends the protected information to the network entity.

After the MS root key Kc is generated, the MS may derive, by adopting the MS root key Kc, an MS integrity key Ki used for security protection. Further, the MS may also derive an integrity key Kip and a cipher key Kcp at the same time by adopting the MS root key Kc, which is not limited in the embodiment of the present invention. Specifically, the specific manner for the MS to derive the MS integrity key by adopting the MS root key Kc may include a direct manner and a negotiation manner. The direct manner for the MS to derive the MS integrity key is the same as the direct manner for the network entity to derive the network integrity key. That is, the MS may derive the MS integrity key by adopting the MS root key Kc generated by the network entity in a one-way authentication process as a parameter and adopting a key derivation function KDF.

The negotiation for the MS to derive the MS integrity key is as follows:
1). An MS sends a request message to a network entity to trigger the network entity to generate a random parameter Rn; where the request message at least carries MS identity information (for example, an MS id).
   The request message sent by the MS may be a Layer 3 message, for example, an LA message.
2). The MS receives a random parameter Rn sent by the network entity.
3). The MS derives a mobile station integrity key by adopting the MS root key Kc generated by the network entity in the one-way authentication process and the random parameter Rn as key derivation function parameters and adopting a key derivation function F, for example, ki = =F {Kc, Rn}.

Further, in the negotiation manner, if the request message sent by the MS further carries a random parameter Ru generated by the MS in addition to the MS identity information, the MS may further receive the random parameter Ru returned by the network entity, and verify whether the random parameter Ru returned by the network entity and the random parameter Ru generated by the MS are the same; if yes, derive the MS integrity key by adopting the MS root key generated in the one-way authentication process with the network entity, the random parameter Ru and the random parameter Rn as key derivation function parameters and adopting a key derivation function F, for example, ki = = F{Kc, Ru, Rn}.

Further, in the negotiation manner, if the request message sent by the MS further carries a string (for example, "PWS") in addition to the MS identity information, the random parameter Ru generated by the MS, the string is used for indicating a type of a service to which the derived integrity key (that is, indicating the use of the integrity key) is applied, so that after verifying that the random parameter Ru returned by the network entity and the random parameter Ru generated by the MS are the same, the MS may derive the MS integrity key by adopting the MS root key generated in the one-way authentication process with the network entity, the random parameter Ru, the random parameter Rn, and the string as key derivation function parameters and adopting a key derivation function F, for example, Ki = F{Kc, Ru, Rn, "PWS"}.

Optionally, in step 202, in addition to the identifier of the integrity algorithm, the security start message may further carry a PWS public key, so that after receiving the protected security start message, the MS may obtain the PWS public key by parsing the protected security start message, and adopt the PWS public key to verify the integrity of an urgent message broadcast by a PWS, to confirm whether the urgent message is valid, thereby preventing unnecessary public panic caused by an false urgent message. Because the security start message sent by the network entity is protected by the network integrity key, it is very difficult for an attacker to launch a Bidding Down attack on the PWS public key carried in the security start message, so that the security of the PWS public key carried in the security start message is ensured, so as to enhance the security of a GSM system, thereby extending the application of some services including a PWS in the GSM system.

In Embodiment 2 of the present invention, because a security start message sent by a network entity is protected by a network integrity key, it is very difficult for an attacker to launch a Bidding Down attack on an integrity algorithm identifier carried in the security start message, so that the security of the integrity algorithm identifier carried in the security start message is ensured, so as to enhance the security of a GSM system, thereby extending the application of some services including a PWS in the GSM system.

### Embodiment 3

Refer to FIG. 3. FIG. 3 is a flow chart diagram of a GSM security method provided in Embodiment 3 of the present invention. As shown in FIG. 3, the method may include the following steps:
301. A network entity derives a network integrity key by adopting a network root key Kc generated in a one-way authentication process with an MS.
   The network entity may also further derive a cipher key by adopting the network root key Kc generated in the one-way authentication process with the MS, which is not limited in the embodiment of the present invention.
302. The network entity protects a security start message by adopting the network integrity key, where the security start message carries a PWS public key.
   The security start message may be a CIPHERING MODE COMMAND (for a GSM system) or an Authentication and ciphering request (for GPRS), which is not limited in the embodiment of the present invention.
303. The network entity sends the protected security start message to the MS, so that the MS receives the protected security start message and obtains a PWS public key by parsing the protected security start message, and adopts the PWS public key to verify the integrity of an urgent message broadcast by a PWS, to confirm whether the urgent message is valid.

In the embodiment of the present invention, the network entity may define, in the security start message, a PWS public key information unit for carrying a PWS public key. The PWS public key information unit defined by the network entity may carry a PWS public key (PWS public key) only, as shown in Table 5. Alternatively, the PWS public key information unit defined by the network entity may carry two parts of information, one part being a PWS public key (PWS public key), and the other part being verification information or protection information (Protection Part) of the PWS public key, as shown in Table 6.

**Table 5 Format of PWS Public Key Information Unit**

| 8 | 7 | 6 | 5 | 4 | 3 | 2 | 1 | |
|---|---|---|---|---|---|---|---|---|
| PWS public key IE | | | | PWS Public key ID | | | | Octet 1 |
| PWS public key | | | | | | | | |
| ... | | | | | | | | |
| PWS public key | | | | | | | | Octet n |

**Table 6 Format of PWS Public Key Information Unit**

| 8 | 7 | 6 | 5 | 4 | 3 | 2 | 1 | |
|---|---|---|---|---|---|---|---|---|
| PWS public key IE | | | | PWS Public key ID | | | | Octet 1 |
| PWS public key | | | | | | | | |
| ... | | | | | | | | |
| PWS public key | | | | | | | | Octet n |
| Protection Part | | | | | | | | |

In the embodiment of the present invention, before sending the security start message to the MS, the network entity may protect the security start message by adopting a network integrity key. Compared with the prior art in which no security protection is provided when the network entity sends a CIPHERING MODE COMMAND or an Authentication and ciphering request, in the embodiment of the present invention, a bidding down attack on the security start message may be prevented, thereby ensuring the security of a PWS public key carried in the security start message.

In the embodiment of the present invention, protecting, by the network entity, the security start message by adopting the network integrity key in step 302 may be specifically: protecting the whole security start message by adopting the network integrity key, or protecting only the PWS public key carried in the security start message by adopting the network integrity key.

There are mainly the following methods for the network entity to protect the PWS public key carried in the security start message by adopting the network integrity key:
Method 1: The network entity performs exclusive or processing on the derived network integrity key and the PWS public key to implement protection for the PWS public key.
Method 2: The network entity performs signature calculation on the PWS public key by adopting the derived network integrity key to implement the protection for the PWS public key.

In the embodiment of the present invention, the network entity may further adopt other methods to implement the protection for the PWS public key, for example:
1. The network entity may carry the security start message having an integrity algorithm to perform Hash (HASH) or keyed-Hash message authentication code (keyed-Hash Message Authentication Code, HMAC) calculation, and perform exclusive or processing on the result of calculation and the PWS public key, to implement the protection for the PWS public key.
2. The network entity may perform signature calculation on the PWS public key by adopting the network root key Kc generated in the one-way authentication process with the MS, to implement the protection for the PWS public key.
3. The network entity may perform exclusive or processing on the PWS public key by adopting the network root key Kc generated in the one-way authentication process with the MS, to implement the protection for the PWS public key.

In Embodiment 3 of the present invention, if the security start message protected by the network entity carries the PWS public key, after receiving the protected security start message, the MS may obtain the PWS public key by parsing the security start message, and adopt the PWS public key to verify the integrity of an urgent message broadcast by a PWS, to confirm whether the urgent message is valid. Because the security start message sent by the network entity is protected by the network integrity key, it is very difficult for an attacker to launch a Bidding Down attack on the PWS public key carried in the security start message, so that the security of the PWS public key carried in the security start message is ensured, so as to enhance the security of a GSM system, thereby extending the application of some services including a PWS in the GSM system.

In Embodiment 3 of the present invention, the network entity may derive the network integrity key by adopting the network root key generated in the one-way authentication process with the MS, protect the security start message by adopting the network integrity key, and send the protected security start message to the MS, so that the MS may obtain the PWS public key by parsing the security start message, and adopt the PWS public key to verify the integrity of an urgent message broadcast by a PWS, to confirm whether the urgent message is valid. Because the security start message sent by the network entity is protected by the network integrity key, it is very difficult for an attacker to launch a Bidding Down attack on the PWS public key carried in the security start message, so that the security of the PWS public key carried in the security start message is ensured, so as to enhance the security of a GSM system, thereby extending the application of some services including a PWS in the GSM system.

### Embodiment 4

Refer to FIG. 4. FIG. 4 is a flow chart diagram of a GSM security method provided in Embodiment 4 of the present invention. As shown in FIG. 4, the method may include the following steps:
401. An MS receives a security start message sent by a network entity, where the security start message carries a PWS public key; the security start message is protected by the network entity by adopting a network integrity key, the network integrity key is derived by the network entity by adopting a network root key Kc generated in a one-way authentication process with the MS.
   The security start message may be a CIPHERING MODE COMMAND (for a GSM system) or an Authentication and ciphering request (for GPRS), which is not limited in the embodiment of the present invention.
402. The MS obtains the PWS public key by parsing the security start message, and adopts the PWS public key to verify the integrity of an urgent message broadcast by a PWS, to confirm whether the urgent message is valid.

In Embodiment 4 of the present invention, as a security start message sent by a network entity is protected by a network integrity key, it is very difficult for an attacker to launch a Bidding Down attack on a PWS public key carried in the security start message, so that the security of the PWS public key carried in the security start message is ensured, so as to enhance the security of a GSM system, thereby extending the application of some services including a PWS in the GSM system.

### Embodiment 5

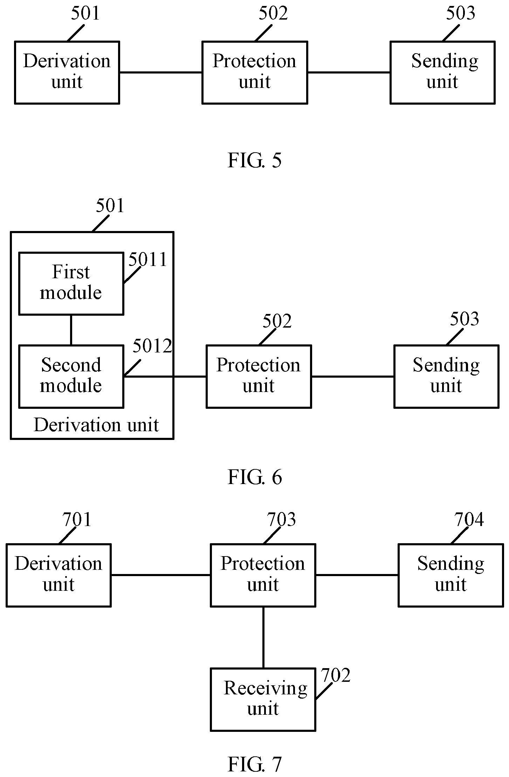

Refer to FIG. 5. FIG. 5 is a structural diagram of a network entity provided in an embodiment of the present invention, where the network entity is applied to a GSM system (also including a GPRS system). The network entity provided in Embodiment 5 of the present invention may be an MSC or a VLR or a BSC. As shown in FIG. 5, the network entity may include:
a derivation unit 501, configured to derive a network integrity key by adopting a network root key Kc generated by the network entity in a one-way authentication process with an MS;
a protection unit 502, configured to protect a security start message by adopting the network integrity key derived by the derivation unit 501, where the security start message at least carries an identifier of an integrity algorithm; and
a sending unit 503, configured to send the security start message protected by the protection unit 502 to the MS, so that the MS protects information by adopting an MS integrity key and the integrity algorithm and sends the protected information to the network entity; where the MS integrity key is derived by the MS by adopting an MS root key Kc generated in a one-way authentication process with the network entity, the MS root key Kc and the network root key Kc are the same, and the MS integrity key and the network integrity key are the same.

In the embodiment of the present invention, the security start message may be a CIPHERING MODE COMMAND (for a GSM system) or an Authentication and ciphering request (for a GPRS system), which is not limited in the embodiment of the present invention.

As an optional implementation manner, the derivation unit 501 may be specifically configured to derive a network integrity key by adopting the network root key Kc generated by the network entity in the one-way authentication process with the MS as a key derivation function parameter and adopting a key derivation function KDF.

As an optional implementation manner, as shown in FIG. 6, the derivation unit 501 may include:
a first module 5011, configured to receive a request message sent by the MS, to trigger the generation of a random parameter Rn; where the request message at least carries MS identity information (for example, an MS id); and
a second module 5012, configured to derive a network integrity key by adopting the network root key Kc generated by the network entity in the one-way authentication process with the MS and the random parameter Rn as key derivation function parameters and adopting a key derivation function F.

In the network entity shown in FIG. 6, if the request message sent by the MS further carries a random parameter Ru generated by the MS, the second module 5012 is further configured to derive a network integrity key by adopting the network root key Kc generated by the network entity in the one-way authentication process with the MS, the random parameter Ru and the random parameter Rn as key derivation function parameters and adopting a key derivation function F.

In the network entity shown in FIG. 6, if the request message sent by the MS further carries a string (for example, "PWS") in addition to the MS identity information and the random parameter Ru generated by the MS, and the string is used for indicating a type of a service to which the derived integrity key (that is, indicating the use of the integrity key) is applied, the second module 5012 is further configured to derive a network integrity key by adopting the network root key Kc generated by the network entity in the one-way authentication process with the MS, the random parameter Ru, the random parameter Rn and the string as key derivation function parameters and adopting a key derivation function F.

As an optional implementation manner, in the network entity shown in FIG. 5 or FIG. 6, the protection unit 502 may be specifically configured to protect the identifier of the integrity algorithm in the security start message by adopting the network integrity key derived by the derivation unit 501.

As an optional implementation manner, in the network entity shown in FIG. 5 or FIG. 6, the protected security start message may further carry a PWS public key, so that the MS receives the protected security start message and may obtain the PWS public key by parsing the security start message, and adopt the PWS public key to verify the integrity of an urgent message broadcast by a PWS, to confirm whether the urgent message is valid. Because the security start message sent by the network entity is protected by the network integrity key, it is very difficult for an attacker to launch a Bidding Down attack on the PWS public key carried in the security start message, so that the security of the PWS public key carried in the security start message is ensured, so as to enhance the security of a GSM system, thereby extending the application of some services including a PWS in the GSM system.

Correspondingly, if the security start message may further carry a PWS public key in addition to the identifier of the integrity algorithm, the protection unit 502 may be specifically configured to protect the identifier of the integrity algorithm and the PWS public key in the security start message by adopting the network integrity key derived by the derivation unit 501.

In Embodiment 5 of the present invention, the derivation unit 501 may derive a network integrity key by adopting a network root key generated in a one-way authentication process with an MS, the protection unit 502 protects a security start message by adopting the network integrity key, then the sending unit 503 sends the protected security start message to the MS, so that the MS may protect information by adopting an MS integrity key and an integrity algorithm corresponding to an integrity algorithm identifier carried in the security start message and send the protected information to the network entity. Because the security start message sent by a network entity is protected by a network integrity key, it is very difficult for an attacker to launch a Bidding Down attack on the integrity algorithm identifier carried in the security start message, so that the security of the integrity algorithm identifier carried in the security start message is ensured, so as to enhance the security of a GSM system, thereby extending the application of some services including a PWS in the GSM system.

### Embodiment 6

Refer to FIG. 7. FIG. 7 is a structural diagram of a mobile station provided in an embodiment of the present invention, where the mobile station is applied to a GSM system (also including a GPRS system). The mobile station provided in Embodiment 5 of the present invention may be a mobile phone, a handheld computer, a MID, or the like. As shown in FIG. 7, the mobile station may include:
a derivation unit 701, configured to derive a mobile station integrity key by adopting a mobile station root key Kc generated by the mobile station in a one-way authentication process with a network entity; and
a receiving unit 702, configured to receive a security start message sent by a network entity, where the security start message at least carries an identifier of an integrity algorithm; the security start message is protected by the network entity by adopting a network integrity key, the network integrity key is derived by the network entity by adopting a network root key Kc generated in a one-way authentication process with a mobile station; the mobile station root key Kc and the network root key Kc are the same, and the mobile station integrity key and the network integrity key are the same;
in the embodiment of the present invention, the security start message may be a CIPHERING MODE COMMAND (for a GSM system) or an Authentication and ciphering request (for a GPRS system), which is not limited in the embodiment of the present invention;
a protection unit 703, configured to protect information by adopting the mobile station integrity key derived by the derivation unit 701 and the integrity algorithm; and
a sending unit 704, configured to send the information protected by the protection unit 703 to the network entity.

The derivation unit 701 may be further configured to derive a mobile station cipher key by adopting the mobile station root key Kc generated by the mobile station in a one-way authentication process with the network entity; where the mobile station cipher key and a network cipher key are the same.

As an optional implementation manner, the derivation unit 701 may be specifically configured to derive a mobile station integrity key by adopting a mobile station root key Kc generated by the mobile station in a one-way authentication process with a network entity as a parameter and adopting a key derivation function KDF.

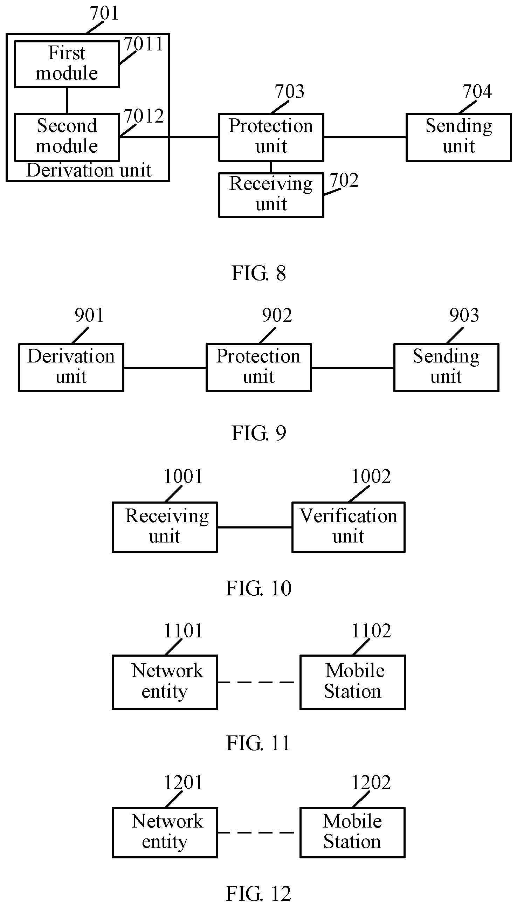

As an optional implementation manner, as shown in FIG. 8, the derivation unit 701 may include:
a first module 7011, configured to send a request message to a network entity to trigger the network entity to generate a random parameter Rn, and receive the random parameter Rn sent by the network entity; where the request message at least carries identity information of the mobile station; and
a second module 7012, configured to derive a mobile station integrity key by adopting a mobile station root key Kc generated by the mobile station in a one-way authentication process with the network entity and the random parameter Rn as key derivation function parameters and adopting a key derivation function F.

In the mobile station shown in FIG. 8, if the request message sent by the first module 7011 further carries the random parameter Ru generated by the mobile station, the first module 7011 is further configured to receive the random parameter Ru returned by the network entity; the second module 7012 is further configured to verify whether the random parameter Ru returned by the network entity and the random parameter Ru generated by the mobile station are the same, and if yes, derive a mobile station integrity key by adopting a mobile station root key Kc generated in a one-way authentication process with the network entity, the random parameter Ru and the random parameter Rn as key derivation function parameters and adopting a key derivation function F.

In the network entity shown in FIG. 8, if the request message sent by the first module 7011 further carries a string (for example, "PWS") in addition to the MS identity information and the random parameter Ru generated by the mobile station, where the string is used for indicating a type of a service to which the derived integrity key (that is, indicating the use of the integrity key) is applied, the second module 7012 is further configured to verify whether the random parameter Ru returned by the network entity and the random parameter Ru generated by the mobile station are the same, and if yes, derive a mobile station integrity key by adopting the mobile station root key Kc generated by the mobile station in a one-way authentication process with the network entity, the random parameter Ru, the random parameter Rn and the string as key derivation function parameters and adopting a key derivation function F.

In the network entity shown in FIG. 8, the mobile station further includes a verification unit 705, and when the security start message that is received by the receiving unit 702 and is sent by the network entity further carries a PWS public key, the verification unit 705 is configured to obtain the PWS public key by parsing the security start message received by the receiving unit 702, and adopt the PWS public key to verify the integrity of an urgent message broadcast by a PWS, to confirm whether the urgent message is valid.

In Embodiment 6 of the present invention, because the security start message sent by a network entity is protected by a network integrity key, it is very difficult for an attacker to launch a Bidding Down attack on the integrity algorithm identifier carried in the security start message, so that the security of the integrity algorithm identifier carried in the security start message is ensured, so as to enhance the security of a GSM system, thereby extending the application of some services including a PWS in the GSM system.

### Embodiment 7:

Refer to FIG. 9. FIG. 9 is a structural diagram of another network entity provided in an embodiment of the present invention, where the network entity is applied to a GSM system (also including a GPRS system). As shown in FIG. 9, the network entity may include:
a derivation unit 901, configured to derive a network integrity key by adopting a network root key generated by the network entity in a one-way authentication process with a mobile station;
a protection unit 902, configured to protect a security start message by adopting the network integrity key derived by the derivation unit 901, where the security start message carries a public warning system PWS public key; and
a sending unit 903, configured to send the security start message protected by the protection unit 902 to the mobile station, so that the mobile station receives the protected security start message and obtains the PWS public key by parsing the protected security start message, and adopts the PWS public key to verify the integrity of an urgent message broadcast by a PWS, to confirm whether the urgent message is valid.

The derivation unit 901 may be further configured to derive a network cipher key by adopting the network root key generated by the network entity in the one-way authentication process with the mobile station.

In Embodiment 7 of the present invention, because the security start message sent by a network entity is protected by a network integrity key, it is very difficult for an attacker to launch a Bidding Down attack on a PWS public key carried in the security start message, so that the security of the PWS public key carried in the security start message is ensured, so as to enhance the security of a GSM system, thereby extending the application of some services including a PWS in the GSM system.

### Embodiment 8

Refer to FIG. 10. FIG. 10 is a structural diagram of another mobile station provided in an embodiment of the present invention, where the mobile station is applied to a GSM system (also including a GPRS system). As shown in FIG. 10, the mobile station may include:
a receiving unit 1001, configured to receive a security start message sent by a network entity, where the security start message carries a PWS public key; the security start message is protected by the network entity by adopting a network integrity key, and the network integrity key is derived by the network entity by adopting a network root key Kc generated in a one-way authentication process with the mobile station;
a verification unit 1002, configured to obtain the PWS public key by parsing the security start message received by the receiving unit 1001, and adopt the PWS public key to verify the integrity of an urgent message broadcast by a PWS, to confirm whether the urgent message is valid.

In Embodiment 8 of the present invention, because the security start message sent by a network entity is protected by a network integrity key, it is very difficult for an attacker to launch a Bidding Down attack on a PWS public key carried in the security start message, so that the security of the PWS public key carried in the security start message is ensured, so as to enhance the security of a GSM system, thereby extending the application of some services including a PWS in the GSM system.

### Embodiment 9

Refer to FIG. 11. FIG. 11 is a GSM security system provided in an embodiment of the present invention, where the GSM security system is applied to a GSM system (also including a GPRS system). As shown in FIG. 11, the mobile station may include a network entity 1101 and a mobile station 1102. The structure and functions of the network entity 1101 are the same as the structure and functions of the network entity shown in FIG. 5, or are the same as the structure and functions of the network entity shown in FIG. 6, which are not repeated in the embodiment of the present invention. The structure and functions of the mobile station 1102 are the same as the structure and functions of the mobile station shown in FIG. 7, or are the same as the structure and functions of the mobile station shown in FIG. 8, which are not repeated in the embodiment of the present invention.

The dotted line between the network entity 1101 and the mobile station 1102 indicates a wireless connection between the network entity 1101 and the mobile station 1102.

Refer to FIG. 12. FIG. 12 shows another GSM security system provided in an embodiment of the present invention, whre the GSM security system is applied to a GSM system (also including a GPRS system). As shown in FIG. 12, the mobile station may include a network entity 1201 and a mobile station 1202. The structure and functions of the network entity 1201 are the same as the structure and functions of the network entity shown in FIG. 9, which are not repeated in the embodiment of the present invention. The structure and functions of the mobile station 1202 are the same as the structure and functions of the mobile station shown in FIG. 10, which are not repeated in the embodiment of the present invention.

The dotted line between the network entity 1201 and the mobile station 1202 indicates a wireless connection between the network entity 1201 and the mobile station 1202.

A person skilled in the art may understand that all or part of the steps of the methods in the embodiments may be implemented by a program instructing relevant hardware. The program may be stored in a computer readable storage medium, and the storage medium may include: a flash drive, a read-only memory (Read-Only Memory, ROM), a random access memory (Random Access Memory, RAM), a magnetic disk, or an optical disk.

The GSM security method and system, and relevant apparatuses provided in the embodiments of the present invention are described in detail above. The principle and implementation of the present invention are described herein through specific examples. The description about the embodiments of the present invention is merely provided for ease of understanding of the method and core idea of the present invention. A person of ordinary skill in the art can make variations and modifications to the present invention in terms of the specific implementation and application scope according to the idea of the present invention. Therefore, the specification shall not be construed as a limit to the present invention.

## Claims

1. A GSM security method, comprising:
deriving (101), by a base station controller, BSC, a network integrity key by adopting a network root key generated in a one-way authentication process with a mobile station as a key derivation function parameter and adopting a key derivation function KDF;
protecting (102), by the BSC, a security start message by adopting the network integrity key, wherein the security start message at least carries an identifier of an integrity algorithm;
sending (103), by the BSC, the protected security start message to the mobile station, so that the mobile station protects information by adopting a mobile station integrity key and the integrity algorithm and sends the protected information to the BSC; wherein the mobile station integrity key is derived by the mobile station by adopting a mobile station root key generated in a one-way authentication process with the BSC, the mobile station root key and the network root key are the same, and the mobile station integrity key and the network integrity key are the same;
wherein the security start message further carries a public warning system, PWS, public key, and the method further comprises:
obtaining, by the mobile station, the PWS public key by parsing the security start message, and adopting the PWS public key to verify integrity of an urgent message broadcast by a PWS, to confirm whether the urgent message is valid;
wherein the protecting, by the BSC, a security start message by adopting the network integrity key comprises:
protecting, by the BSC, the identifier of the integrity algorithm and the PWS public key in the security start message by adopting the network integrity key.

2. The method according to claim 1, further comprising:
deriving, by the BSC, a network cipher key by adopting the network root key generated in the one-way authentication process with the mobile station; wherein the network cipher key and a mobile station cipher key are the same.

3. The method according to claim 1, wherein the security start message comprises a ciphering mode command CIPHERING MODE COMMAND or an authentication and ciphering request message.

4. The method according to any one of claims 1 to 3, wherein the protecting, by the BSC, a security start message by adopting the network integrity key comprises:
protecting, by the BSC, the identifier of the integrity algorithm in the security start message by adopting the network integrity key.

5. A GSM security method, comprising:
deriving (201), by a mobile station, a mobile station integrity key by adopting a mobile station root key generated in a one-way authentication process with a base station controller, BSC as a parameter and adopting a key derivation function KDF;
receiving (202), by the mobile station, a security start message sent by the BSC, wherein the security start message at least carries an identifier of an integrity algorithm; the security start message is protected by the BSC by adopting a network integrity key, the network integrity key is derived by the BSC by adopting a network root key generated in a one-way authentication process with the mobile station; the mobile station root key and the network root key are the same, and the mobile station integrity key and the network integrity key are the same; and
protecting (203), by the mobile station, information by adopting the mobile station integrity key and the integrity algorithm and sending the protected information to the BSC;
wherein the security start message further carries a public warning system, PWS, public key, and the method further comprises:
obtaining, by the mobile station, the PWS public key by parsing the security start message, and adopting the PWS public key to verify integrity of an urgent message broadcast by a PWS, to confirm whether the urgent message is valid.

6. The method according to claim 5, further comprising:
deriving, by the mobile station, a mobile station cipher key by adopting the mobile station root key generated in the one-way authentication process with the BSC; wherein the mobile station cipher key and a network cipher key are the same.

7. The method according to claim 5, wherein the security start message comprises a ciphering mode command CIPHERING MODE COMMAND or an authentication and ciphering request message Authentication and ciphering request.

8. A base station controller, BSC, applied to a GSM, comprising:
a derivation unit (501), configured to derive a network integrity key by adopting a network root key generated by the BSC in a one-way authentication process with a mobile station as a key derivation function parameter and adopting a key derivation function KDF;
a protection unit (502), configured to protect a security start message by adopting the network integrity key derived by the derivation unit (501), wherein the security start message at least carries an identifier of an integrity algorithm;
a sending unit (503), configured to send the security start message protected by the protection unit (502) to the mobile station, so that the mobile station protects information by adopting a mobile station integrity key and the integrity algorithm and send the protected information to the BSC; wherein the mobile station integrity key is derived by the mobile station by adopting a mobile station root key generated in a one-way authentication process with the BSC, the mobile station root key and the network root key are the same, and the mobile station integrity key and the network integrity key are the same;
wherein:
the security start message further carries a public warning system, PWS, public key, and the mobile station obtains the PWS public key by parsing the security start message, and adopts the PWS public key to verify integrity of an urgent message broadcast by a PWS, to confirm whether the urgent message is valid;
wherein the protection unit (502) is specifically configured to protect the identifier of the integrity algorithm and the PWS public key in the security start message by adopting the network integrity key derived by the derivation unit (501).

9. The BSC according to claim 8, wherein the derivation unit (501) is further configured to derive a network cipher key by adopting the network root key generated by the BSC in the one-way authentication process with the mobile station; and the network cipher key and a mobile station cipher key are the same.

10. The BSC according to claim 8, wherein the security start message comprises a ciphering mode command CIPHERING MODE COMMAND or an authentication and ciphering request message Authentication and ciphering request.

11. The BSC according to any one of claims 8 to 10, wherein the protection unit (502) is specifically configured to protect the identifier of the integrity algorithm in the security start message by adopting the network integrity key derived by the derivation unit (501).

12. A mobile station, applied to a GSM, and comprising:
a derivation unit (701), configured to derive a mobile station integrity key by adopting a mobile station root key generated by the mobile station in a one-way authentication process with a BSC as a parameter and adopting a key derivation function KDF;
a receiving unit (702), configured to receive a security start message sent by the BSC, wherein the security start message at least carries an identifier of an integrity algorithm; the security start message is protected by the BSC by adopting a network integrity key, the network integrity key is derived by the BSC by adopting a network root key generated in a one-way authentication process with the mobile station; the mobile station root key and the network root key are the same, and the mobile station integrity key and the network integrity key are the same;
a protection unit (703), configured to protect information by adopting the mobile station integrity key derived by the derivation unit (701) and the integrity algorithm; and
a sending unit (704), configured to send the information protected by the protection unit (703) to the BSC;
wherein the security start message further carries a public warning system, PWS, public key, and the mobile station further comprises:
a verification unit, configured to obtain the PWS public key by parsing the security start message received by the receiving unit (702), and adopt the PWS public key to verify integrity of an urgent message broadcast by a PWS, to confirm whether the urgent message is valid.

13. The mobile station according to claim 12, wherein the derivation unit (701) is further configured to derive a mobile station cipher key by adopting the mobile station root key generated by the mobile station in the one-way authentication process with the BSC; and the mobile station cipher key and a network cipher key are the same.

14. The mobile station according to claim 12, wherein the security start message comprises a ciphering mode command CIPHERING MODE COMMAND or an authentication and ciphering request message Authentication and ciphering request.

15. A GSM security system, comprising the BSC (1101) in any one of claims 8 to 11 and the mobile station (1102) in any one of claims 12 to 14.

## Patentansprüche

1. GSM-Sicherheitsverfahren, das umfasst:
Ableiten (101) eines Netzwerk-Integritätsschlüssels mithilfe eines "Base Station Controller" (BSC) durch Übernehmen eines Netzwerk-"Root"-Schlüssels, der bei einem "One-Way"-Authentifizierungsprozess mit einer Mobilstation erzeugt wird, als einen Schlüsselableitungs-Funktionsparameter und Übernehmen einer Schlüsselableitungsfunktion (key derivation function, KDF);
Schützen (102) einer Sicherheitsstartnachricht mithilfe des BSC durch Übernehmen des Netzwerk-Integritätsschlüssels, wobei die Sicherheitsstartnachricht mindestens eine Kennung eines Integritätsalgorithmus überträgt;
Senden (103) der geschützten Sicherheitsstartnachricht mithilfe des BSC an die Mobilstation, sodass die Mobilstation Informationen durch Übernehmen eines Mobilstations-Integritätsschlüssels und des Integritätsalgorithmus schützt und die geschützten Informationen an den BSC sendet, wobei der Mobilstations-Integritätsschlüssel von der Mobilstation durch Übernehmen eines Mobilstations-"Root"-Schlüssels abgeleitet wird, der bei einem "One-Way"-Authentifizierungsprozess mit dem BSC erzeugt wird, wobei der Mobilstations-"Root"-Schlüssel und der Netzwerk-"Root"-Schlüssel derselbe sind, und der Mobilstations-Integritätsschlüssel und der Netzwerks-Integritätsschlüssel derselbe sind,
wobei die Sicherheitsstartnachricht ferner einen öffentlichen Schlüssel eines öffentlichen Warnsystems (public warning system, PWS) überträgt und das Verfahren ferner umfasst:
Erlangen des öffentlichen PWS-Schlüssels mithilfe der Mobilstation durch Parsen der Sicherheitsstartnachricht und Übernehmen des öffentlichen PWS-Schlüssels, um eine Integrität einer von einem PWS rundgesendeten dringenden Nachricht zu verifizieren, um zu bestätigen, dass die dringende Nachricht gültig ist,
wobei das Schützen einer Sicherheitsstartnachricht mithilfe des BSC durch Übernehmen des Netzwerk-Integritätsschlüssels umfasst:
Schützen der Kennung des Integritätsalgorithmus und des öffentlichen PWS-Schlüssels in der Sicherheitsstartnachricht mithilfe des BSC durch Übernehmen des Netzwerk-Integritätsschlüssels.

2. Verfahren nach Anspruch 1, das ferner umfasst:
Ableiten eines Netzwerk-Chiffrierschlüssels mithilfe des BSC durch Übernehmen des Netzwerk-"Root"-Schlüssels, der bei dem "One-Way"-Authentifizierungsprozess mit der Mobilstation erzeugt wird, wobei der Netzwerk-Chiffrierschlüssel und ein Mobilstations-Chiffrierschlüssel derselbe sind.

3. Verfahren nach Anspruch 1, wobei die Sicherheitsstartnachricht einen Chiffriermodusbefehl "CIPHERING MODE COMMAND" oder eine Authentifizierungs- und Chiffrier-Anforderungsnachricht umfasst.

4. Verfahren nach einem der Ansprüche 1 bis 3, wobei das Schützen einer Sicherheitsstartnachricht mithilfe des BSC durch Übernehmen des Netzwerk-Integritätsschlüssels umfasst:
Schützen der Kennung des Integritätsalgorithmus in der Sicherheitsstartnachricht mithilfe der BSC durch Übernehmen des Netzwerk-Integritätsschlüssels.

5. GSM-Sicherheitsverfahren, das umfasst:
Ableiten (201) eines Mobilstations-Integritätsschlüssels mithilfe einer Mobilstation durch Übernehmen eines Mobilstations-"Root"-Schlüssels, der bei einem "One-Way"-Authentifizierungsprozess mit einem "Base Station Controller" (BSC) erzeugt wird, als einen Parameter und Übernehmen einer Schlüsselableitungsfunktion (KDF); Empfangen (202) einer von dem BSC gesendeten Sicherheitsstartnachricht mithilfe der Mobilstation, wobei die Sicherheitsstartnachricht mindestens eine Kennung eines Integritätsalgorithmus überträgt, wobei die Sicherheitsstartnachricht von dem BSC durch Übernehmen eines Netzwerk-Integritätsschlüssels geschützt wird, wobei der Netzwerk-Integritätsschlüssel von dem BSC durch Übernehmen eines Netzwerk-"Root"-Schlüssels abgeleitet wird, der bei einem "One-Way"-Authentifizierungsprozess mit der Mobilstation erzeugt wird, wobei der Mobilstations-"Root"-Schlüssel und der Netzwerk-"Root"-Schlüssel derselbe sind, und der Mobilstations-Integritätsschlüssel und der Netzwerk-Integritätsschlüssel derselbe sind, und
Schützen (203) von Informationen mithilfe der Mobilstation durch Übernehmen des Mobilstations-Integritätsschlüssels und des Integritätsalgorithmus und Senden der geschützten Informationen an den BSC,
wobei die Sicherheitsstartnachricht ferner einen öffentlichen Schlüssel eines öffentlichen Warnsystems (PWS) überträgt und das Verfahren ferner umfasst:
Erlangen des öffentlichen PWS-Schlüssels mithilfe der Mobilstation durch Parsen der Sicherheitsstartnachricht und Übernehmen des öffentlichen PWS-Schlüssels, um eine Integrität einer von einem PWS rundgesendeten dringenden Nachricht zu verifizieren, um zu bestätigen, dass die dringende Nachricht gültig ist.

6. Verfahren nach Anspruch 5, das ferner umfasst:
Ableiten eines Mobilstations-Chiffrierschlüssels mithilfe der Mobilstation durch Übernehmen des Mobilstations-"Root"-Schlüssels, der bei dem "One-Way"-Authentifizierungsprozess mit dem BSC erzeugt wird, wobei der Mobilstations-Chiffrierschlüssel und ein Netzwerk-Chiffrierschlüssel derselbe sind.

7. Verfahren nach Anspruch 5, wobei die Sicherheitsstartnachricht einen Chiffriermodusbefehl "CIPHERING MODE COMMAND" oder eine Authentifizierungs- und Chiffrier-Anforderungsnachricht Authentifizierungs- und Chiffrier-Anforderung umfasst.

8. "Base Station Controller" (BSC), der bei einem GSM angewendet wird, der umfasst:
eine Ableitungseinheit (501), die dafür konfiguriert ist, einen Netzwerk-Integritätsschlüssel durch Übernehmen eines Netzwerk-"Root"-Schlüssels, der von dem BSC bei einem "One-Way"-Authentifizierungsprozess mit einer Mobilstation erzeugt wird, als einen Schlüsselableitungs-Funktionsparameter und Übernehmen einer Schlüsselableitungsfunktion (KDF) abzuleiten;
eine Schutzeinheit (502), die dafür konfiguriert ist, eine Sicherheitsstartnachricht durch Übernehmen des mithilfe der Ableitungseinheit (501) abgeleiteten Netzwerk-Integritätsschlüssels zu schützen, wobei die Sicherheitsstartnachricht mindestens eine Kennung eines Integritätsalgorithmus überträgt;
eine Sendeeinheit (503), die dafür konfiguriert ist, die von der Schutzeinheit (502) geschützte Sicherheitsstartnachricht an die Mobilstation zu senden, sodass die Mobilstation Informationen durch Übernehmen eines Mobilstations-Integritätsschlüssels und des Integritätsalgorithmus schützt und die geschützten Informationen an den BSC sendet, wobei der Mobilstations-Integritätsschlüssel von der Mobilstation durch Übernehmen eines Mobilstations-"Root"-Schlüssels abgeleitet wird, der bei einem "One-Way"-Authentifizierungsprozess mit dem BSC erzeugt wird, wobei der Mobilstations-"Root"-Schlüssel und der Netzwerk-"Root"-Schlüssel derselbe sind, und der Mobilstations-Integritätsschlüssel und der Netzwerk-Integritätsschlüssel derselbe sind,
wobei:
die Sicherheitsstartnachricht ferner einen öffentlichen Schlüssel eines öffentlichen Warnsystems (PWS) überträgt, und die Mobilstation den öffentlichen PWS-Schlüssel durch Parsen der Sicherheitsstartnachricht erlangt und den öffentlichen PWS-Schlüssel übernimmt, um eine Integrität einer von einem PWS rundgesendeten dringenden Nachricht zu verifizieren, um zu bestätigen, dass die dringende Nachricht gültig ist,
wobei die Schutzeinheit (502) insbesondere dafür konfiguriert ist, die Kennung des Integritätsalgorithmus und den öffentlichen PWS-Schlüssel in der Sicherheitsstartnachricht durch Übernehmen des Netzwerk-Integritätsschlüssels zu schützen, der mithilfe der Ableitungseinheit (501) abgeleitet wird.

9. BSC nach Anspruch 8, wobei die Ableitungseinheit (501) ferner dafür konfiguriert ist, einen Netzwerk-Chiffrierschlüssel durch Übernehmen des von dem BSC bei dem "One-Way"-Authentifizierungsprozess mit der Mobilstation erzeugten Netzwerk-"Root"-Schlüssels abzuleiten, und der Netzwerk-Chiffrierschlüssel und ein Mobilstations-Chiffrierschlüssel derselbe sind.

10. BSC nach Anspruch 8, wobei die Sicherheitsstartnachricht einen Chiffriermodusbefehl "CIPHERING MODE COMMAND" oder eine Authentifizierungs- und Chiffrier-Anforderungsnachricht Authentifizierungs- und Chiffrieranforderung umfasst.

11. BSC nach einem der Ansprüche 8 bis 10, wobei die Schutzeinheit (502) insbesondere dafür konfiguriert ist, die Kennung des Integritätsalgorithmus in der Sicherheitsstartnachricht durch Übernehmen des mithilfe der Ableitungseinheit (501) abgeleiteten Netzwerk-Integritätsschlüssels zu schützen.

12. Mobilstation, die bei einem GSM angewendet wird, und die umfasst:
eine Ableitungseinheit (701), die dafür konfiguriert ist, einen Mobilstations-Integritätsschlüssel durch Übernehmen eines Mobilstations-"Root"-Schlüssels, der von der Mobilstation bei einem "One-Way"-Authentifizierungsprozess mit einem BSC erzeugt wird, als einen Parameter und Übernehmen einer Schlüsselableitungsfunktion (KDF) abzuleiten;
eine Empfangseinheit (702), die dafür konfiguriert ist, eine von dem BSC gesendete Sicherheitsstartnachricht zu empfangen, wobei die Sicherheitsstartnachricht mindestens eine Kennung eines Integritätsalgorithmus überträgt, wobei die Sicherheitsstartnachricht von dem BSC durch Übernehmen eines Netzwerk-Integritätsschlüssels geschützt wird, wobei der Netzwerk-Integritätsschlüssel von dem BSC durch Übernehmen eines Netzwerk-"Root"-Schlüssels abgeleitet wird, der bei einem "One-Way"-Authentifizierungsprozess mit der Mobilstation erzeugt wird, wobei der Mobilstations-"Root"-Schlüssel und der Netzverk-"Root"-Schlüssel derselbe sind, und der Mobilstations-Integritätsschlüssel und der Netzwerk-Integritätsschlüssel derselbe sind;
eine Schutzeinheit (703), die dafür konfiguriert ist, Informationen durch Übernehmen des Mobilstations-Integritätsschlüssels zu schützen, der mithilfe der Ableitungseinheit (701) und des Integritätsalgorithmus abgeleitet wird, und
eine Sendeeinheit (704), die dafür konfiguriert ist, die von der Schutzeinheit (703) geschützten Informationen an den BSC zu senden,
wobei die Sicherheitsstartnachricht ferner einen öffentlichen Schlüssel eines öffentlichen Warnsystems (PWS) überträgt und die Mobilstation ferner umfasst:
eine Verifizierungseinheit, die dafür konfiguriert ist, den öffentlichen PWS-Schlüssel durch Parsen der mithilfe der Empfangseinheit (702) empfangenen Sicherheitsstartnachricht zu erlangen und den öffentlichen PWS-Schlüssel zu übernehmen, um eine Integrität einer von einem PWS rundgesendeten dringenden Nachricht zu verifizieren, um zu bestätigen, dass die dringende Nachricht gültig ist.

13. Mobilstation nach Anspruch 12, wobei die Ableitungseinheit (701) ferner dafür konfiguriert ist, einen Mobilstations-Chiffrierschlüssel durch Übernehmen des von der Mobilstation bei dem "One-Way"-Authentifizierungsprozess mit dem BSC erzeugten Mobilstations-"Root"-Schlüssels abzuleiten, und der Mobilstations-Chiffrierschlüssel und ein Netzwerk-Chiffrierschlüssel derselbe sind.

14. Mobilstation nach Anspruch 12, wobei die Sicherheitsstartnachricht einen Chiffriermodusbefehl "CIPHERING MODE COMMAND" oder eine Authentifizierungs- und Chiffrier-Anforderungsnachricht Authentifizierungs- und Chiffrieranforderung umfasst.

15. GSM-Sicherheitssystem, das den BSC (1101) aus einem der Ansprüche 8 bis 11 sowie die Mobilstation (1102) aus einem der Ansprüche 12 bis 14 umfasst.

## Revendications

1. Procédé de sécurité GSM, comprenant les étapes suivantes :
dériver (101), par un contrôleur de station de base, BSC, une clé d'intégrité de réseau en adoptant une clé racine de réseau générée dans un processus d'authentification unilatérale avec une station mobile comme un paramètre de fonction de dérivation de clé et en adoptant une fonction de dérivation de clé KDF ;
protéger (102), par le BSC, un message de début de sécurité en adoptant la clé d'intégrité de réseau, le message de début de sécurité contenant au moins un identifiant d'un algorithme d'intégrité ;
envoyer (103), par le BSC, le message de début de sécurité protégé à la station mobile, pour que la station mobile protège des informations en adoptant une clé d'intégrité de station mobile et l'algorithme d'intégrité et envoie les informations protégées au BSC ; la clé d'intégrité de station mobile étant dérivée par la station mobile en adoptant une clé racine de station mobile générée dans un processus d'authentification unilatérale avec le BSC, la clé racine de station mobile et la clé racine de réseau étant les mêmes, et la clé d'intégrité de station mobile et la clé d'intégrité de réseau étant les mêmes ;
le message de début de sécurité contenant en outre une clé publique de système d'avertissement public, PWS, et le procédé comprenant en outre :
obtenir, par la station mobile, la clé publique PWS en analysant le message de début de sécurité, et adopter la clé publique PWS pour vérifier l'intégrité d'un message urgent transmis par un PWS, pour confirmer si le message urgent est valide ;
l'étape consistant à protéger, par le BSC, un message de début de sécurité en adoptant la clé d'intégrité de réseau comprenant :
protéger, par le BSC, l'identifiant de l'algorithme d'intégrité et de la clé publique PWS dans le message de début de sécurité en adoptant la clé d'intégrité de réseau.

2. Procédé selon la revendication 1, comprenant en outre :
dériver, par le BSC, une clé de chiffrement de réseau en adoptant la clé racine de réseau générée dans le processus d'authentification unilatérale avec la station mobile ; la clé de chiffrement de réseau et une clé de chiffrement de station mobile étant les mêmes.

3. Procédé selon la revendication 1, dans lequel le message de début de sécurité comprend une commande de mode de chiffrement COMMANDE DE MODE DE CHIFFREMENT ou un message de requête d'authentification et de chiffrement.

4. Procédé selon l'une quelconque des revendications 1 à 3, dans lequel l'étape consistant à protéger, par le BSC, un message de début de sécurité en adoptant la clé d'intégrité de réseau comprend :
protéger, par le BSC, l'identifiant de l'algorithme d'intégrité dans le message de début de sécurité en adoptant la clé d'intégrité de réseau.

5. Procédé de sécurité GSM, comprenant les étapes suivantes :
dériver (201), par une station mobile, une clé d'intégrité de station mobile en adoptant une clé racine de station mobile générée dans un processus d'authentification unilatérale avec un contrôleur de station de base, BSC, comme un paramètre et en adoptant une fonction de dérivation de clé KDF ;
recevoir (202), par la station mobile, un message de début de sécurité envoyé par le BSC, le message de début de sécurité contenant au moins un identifiant d'un algorithme d'intégrité ; le message de début de sécurité étant protégé par le BSC en adoptant une clé d'intégrité de réseau, la clé d'intégrité de réseau étant dérivée par le BSC en adoptant une clé racine de réseau générée dans un processus d'authentification unilatérale avec la station mobile ; la clé racine de station mobile et la clé racine de réseau étant les mêmes, et la clé d'intégrité de station mobile et la clé d'intégrité de réseau étant les mêmes ; et
protéger (203), par la station mobile, des informations en adoptant la clé d'intégrité de station mobile et l'algorithme d'intégrité et envoyer les informations protégées au BSC;
le message de début de sécurité contenant en outre une clé publique de système d'avertissement public, PWS, et le procédé comprenant en outre :
obtenir, par la station mobile, la clé publique PWS en analysant le message de début de sécurité, et adopter la clé publique PWS pour vérifier l'intégrité d'un message urgent transmis par un PWS, pour confirmer si le message urgent est valide.

6. Procédé selon la revendication 5, comprenant en outre :
dériver, par la station mobile, une clé de chiffrement de station mobile en adoptant la clé racine de station mobile générée dans le processus d'authentification unilatérale avec le BSC ; la clé de chiffrement de station mobile et une clé de chiffrement de réseau étant les mêmes.

7. Procédé selon la revendication 5, dans lequel le message de début de sécurité comprend une commande de mode de chiffrement COMMANDE DE MODE DE CHIFFREMENT ou un message de requête d'authentification et de chiffrement Requête d'authentification et de chiffrement.

8. Contrôleur de station de base, BSC, appliqué à un GSM, comprenant :
une unité de dérivation (501), configurée pour dériver une clé d'intégrité de réseau en adoptant une clé racine de réseau générée par le BSC dans un processus d'authentification unilatérale avec une station mobile comme un paramètre de fonction de dérivation de clé et en adoptant une fonction de dérivation de clé KDF ;
une unité de protection (502), configurée pour protéger un message de début de sécurité en adoptant la clé d'intégrité de réseau dérivée par l'unité de dérivation (501), le message de début de sécurité contenant au moins un identifiant d'un algorithme d'intégrité ;
une unité d'envoi (503), configurée pour envoyer le message de début de sécurité protégé par l'unité de protection (502) à la station mobile, pour que la station mobile protège des informations en adoptant une clé d'intégrité de station mobile et l'algorithme d'intégrité et pour envoyer les informations protégées au BSC ; la clé d'intégrité de station mobile étant dérivée par la station mobile en adoptant une clé racine de station mobile générée dans un processus d'authentification unilatérale avec le BSC, la clé racine de station mobile et la clé racine de réseau étant les mêmes, et la clé d'intégrité de station mobile et la clé d'intégrité de réseau étant les mêmes ;
le message de début de sécurité contenant en outre une clé publique de système d'avertissement public, PWS, et la station mobile obtenant la clé publique PWS en analysant le message de début de sécurité, et adoptant la clé publique PWS pour vérifier l'intégrité d'un message urgent transmis par un PWS, pour confirmer si le message urgent est valide ;
l'unité de protection (502) étant configurée spécifiquement pour protéger l'identifiant de l'algorithme d'intégrité et de la clé publique PWS dans le message de début de sécurité en adoptant la clé d'intégrité de réseau dérivée par l'unité de dérivation (501).

9. BSC selon la revendication 8, dans lequel l'unité de dérivation (501) est en outre configurée pour dériver une clé de chiffrement de réseau en adoptant la clé racine de réseau générée par le BSC dans le processus d'authentification unilatérale avec la station mobile ; et la clé de chiffrement de réseau et une clé de chiffrement de station mobile sont les mêmes.

10. BSC selon la revendication 8, dans lequel le message de début de sécurité comprend une commande de mode de chiffrement COMMANDE DE MODE DE CHIFFREMENT ou un message de requête d'authentification et de chiffrement Requête d'authentification et de chiffrement.

11. BSC selon l'une quelconque des revendications 8 à 10, dans lequel l'unité de protection (502) est configurée spécifiquement pour protéger l'identifiant de l'algorithme d'intégrité dans le message de début de sécurité en adoptant la clé d'intégrité de réseau dérivée par l'unité de dérivation (501).

12. Station mobile, appliquée à un GSM, et comprenant :
une unité de dérivation (701), configurée pour dériver une clé d'intégrité de station mobile en adoptant une clé racine de station mobile générée par la station mobile dans un processus d'authentification unilatérale avec un BSC comme un paramètre et en adoptant une fonction de dérivation de clé KDF ;
une unité de réception (702), configurée pour recevoir un message de début de sécurité envoyé par le BSC, le message de début de sécurité contenant au moins un identifiant d'un algorithme d'intégrité ; le message de début de sécurité étant protégé par le BSC en adoptant une clé d'intégrité de réseau, la clé d'intégrité de réseau étant dérivée par le BSC en adoptant une clé racine de réseau générée dans un processus d'authentification unilatérale avec la station mobile ; la clé racine de station mobile et la clé racine de réseau étant les mêmes, et la clé d'intégrité de station mobile et la clé d'intégrité de réseau étant les mêmes ;
une unité de protection (703), configurée pour protéger des informations en adoptant la clé d'intégrité de station mobile dérivée par l'unité de dérivation (701) et l'algorithme d'intégrité ; et
une unité d'envoi (704), configurée pour envoyer les informations protégées par l'unité de protection (703) au BSC ;
le message de début de sécurité contenant en outre une clé publique de système d'avertissement public, PWS, et la station mobile comprenant en outre :
une unité de vérification, configurée pour obtenir la clé publique PWS en analysant le message de début de sécurité reçu par l'unité de réception (702), et adopter la clé publique PWS pour vérifier l'intégrité d'un message urgent transmis par un PWS, pour confirmer si le message urgent est valide.

13. Station mobile selon la revendication 12, dans laquelle l'unité de dérivation (701) est en outre configurée pour dériver une clé de chiffrement de station mobile en adoptant la clé racine de station mobile générée par la station mobile dans le processus d'authentification unilatérale avec le BSC ; et la clé de chiffrement de station mobile et une clé de chiffrement de réseau sont les mêmes.

14. Station mobile selon la revendication 12, dans laquelle le message de début de sécurité comprend une commande de mode de chiffrement COMMANDE DE MODE DE CHIFFREMENT ou un message de requête d'authentification et de chiffrement Requête d'authentification et de chiffrement.

15. Système de sécurité GSM, comprenant le BSC (1101) dans l'une quelconque des revendications 8 à 11 et la station mobile (1102) dans l'une quelconque des revendications 12 à 14.
